Europäisches Patentamt

European Patent Office

Office européen des brevets

(19)

(11)  **EP 1 064 224 B1**

(12)  **FASCICULE DE BREVET EUROPEEN**

(45) Date de publication et mention
de la délivrance du brevet:
**26.05.2004  Bulletin 2004/22**

(21) Numéro de dépôt: **99906402.5**

(22) Date de dépôt: **16.03.1999**

(51) Int Cl.⁷: **C01B 21/06**, C01B 21/076,
C01B 21/082, C01B 31/30

(86) Numéro de dépôt international:
**PCT/IB1999/000441**

(87) Numéro de publication internationale:
**WO 1999/047454 (23.09.1999 Gazette 1999/38)**

(54) **PROCEDE DE SYNTHESE DE CERAMIQUES COMPLEXES PULVERULENTES DE METAUX REFRACTAIRES**

VERFAHREN ZUR HERSTELLUNG VON KOMPLEXER PULVERFÖRMIGER KERAMIK AUS FEUERFESTEN METALLEN

SYNTHESIS METHOD FOR POWDER CERAMIC COMPLEXES OF REFRACTORY METALS

(84) Etats contractants désignés:
**AT BE CH DE DK ES FI FR GB GR IE IT LI LU NL PT SE**

(30) Priorité: **16.03.1998  FR 9803393**

(43) Date de publication de la demande:
**03.01.2001  Bulletin 2001/01**

(73) Titulaire: **SEP Bienvenu-Lacoste**
**74100 Ville-la-Grand (FR)**

(72) Inventeurs:
• **BIENVENU, Gérard**
**F-74250 Viuz-en-Sallaz (FR)**
• **LACOSTE, François**
**F-92200 Neuilly-sur-Seine (FR)**

(74) Mandataire: **Savoye, Jean-Paul et al**
**Moinas & Savoye S.A.,**
**42, rue Plantamour**
**1201 Genève (CH)**

(56) Documents cités:
WO-A-89/05280          US-A- 2 461 018
US-A- 4 459 363

• BOROVINSKAYA I P: "CHEMICAL CLASSES OF THE SHS PROCESSES AND MATERIALS" PURE & APPLIED CHEMISTRY, vol. 64, no. 7, 1 janvier 1992, pages 919-940, XP000351409
• DATABASE INSPEC INSTITUTE OF ELECTRICAL ENGINEERS, STEVENAGE, GB Inspec No. 4606504, BOK SUK KANG ET AL: "Preparation of TiC powder from TiO2 by SHS process" XP002087187 cité dans la demande & JOURNAL OF THE KOREAN INSTITUTE OF METALS AND MATERIALS, MAY 1993, SOUTH KOREA, vol. 31, no. 5, pages 599-605, ISSN 0253-3847
• CHEMICAL ABSTRACTS, vol. 122, no. 8, 20 février 1995 Columbus, Ohio, US; abstract no. 87438, JOO SUNG MIN ET AL.: "Preparation of B4C powder from B2O3 by self-propagating high-temperature synthesis" XP002087759 & TAEHAN KUMSOK HAKHOECHI, vol. 32, no. 10, - 1994 pages 1243-1249,

## Description

La présente invention se rapporte à un procédé de synthèse de certaines céramiques complexes pulvérulentes de métaux réfractaires, selon lequel on mélange un oxyde d'au moins un de ces métaux avec un métal réducteur et avec un métalloïde pur ou combiné sous forme solide, et on chauffe le mélange résultant à une température seuil d'amorce d'une réaction autopropagée, afin d'obtenir la synthèse d'une céramique pulvérulente.

Les céramiques complexes sont des composés comprenant un réseau métallique de ces métaux dans lequel sont insérés des atomes de métalloïdes. L'intérêt de tels composés est celui d'allier à la fois les propriétés des métaux et des céramiques. En raison de leur dureté, ces matériaux résistent particulièrement bien à l'usure et sont adaptés pour entrer par exemple dans la fabrication d'outils de coupe ou de produits à polir. Leur bonne résistance aux attaques chimiques et leur bonne conductivité électrique permettent d'autre part des applications intéressantes dans certains domaines de la chimie, de l'électronique et de l'électrochimie.

La plupart de ces céramiques ont été synthétisées sous la forme de revêtements en couches minces par des procédés sophistiqués et coûteux de dépôts physiques ou chimiques en phase vapeur (PVD et CVD respectivement). Ces procédés, qui ont permis de mesurer les principales caractéristiques de ces céramiques, ne peuvent cependant pas produire celles-ci en quantité industrielle sous la forme de poudres submicroniques qui sont nécessaires pour un grand nombre d'applications.

Les procédés utilisés actuellement pour produire des céramiques ne permettent d'obtenir que des grains relativement gros qui doivent ensuite être broyés, mais dont la taille des grains, même après broyage, ne descend pas en dessous de quelques microns.

On a proposé dans le FR-2 609 461 la fabrication de composés céramiques formés entre un métalloïde et un métal réfractaire, selon lequel on fait réagir le métalloïde avec un métal réducteur au sein d'un bain liquide constitué au moins en partie par un sel fondu du métal réducteur, pour obtenir un composé intermédiaire à caractère salin combinant le métal réducteur et le métalloïde en solution dans le bain. On injecte ensuite dans ce bain un sel réductible du métal réfractaire sous une forme divisée directement répartie dans l'ensemble du bain, pour produire la poudre par réaction du sel réductible avec le composé intermédiaire du métal réducteur.

La technologie mise en oeuvre par ce procédé nécessite de gros investissements. Le procédé lui-même fait intervenir un nombre important d'opérations et entraîne donc un coût de production élevé. De plus, il n'est pas possible avec ce procédé de produire des céramiques à partir d'oxydes des métaux réfractaire qui sont la forme la moins onéreuse sous laquelle on peut se procurer les métaux réfractaires utilisés pour produire ces céramiques, renchérissant de ce fait davantage encore le prix des céramiques ainsi produites.

Il a déjà été proposé dans "Preparation of TiC Powder from $TiO_2$ by SHS Process" de Bok Suk Kang et al, J. of the Korean Inst. of Met. & Mater., Vol. 31, N°5, (1993) de produire de la poudre de TiC de granulométrie submicronique à partir de $TiO_2$ mélangé avec du Mg et du C que l'on fait réagir selon la méthode de synthèse à combustion autopropagée, plus connue sous le sigle SHS (self heating synthesis). Cet article analyse l'influence des proportions de Mg et de carbone sur la qualité finale du produit. Cet article examine également l'influence de la dimension des particules de Mg et du temps de mélange des réactants. Le MgO et le Mg résiduel sont éliminés par filtration dans une solution de HCl à 20%. La poudre obtenue est formée de particules sphériques de 0,3-0,4 $\mu$m avec une distribution resserrée.

On peut cependant constater que les auteurs de cet article se limitent à la production de TiC et au seul Mg en tant que métal réducteur. Le magnésium présente l'inconvénient d'avoir un point d'ébullition à 1103°C, qui est bas par rapport à la température adiabatique de la réaction. Celle-ci a donc un caractère presque explosif, qui rend problématique une réalisation industrielle. D'autre part, la difficulté d'attaquer une magnésie ayant été chauffée à haute température, complique le rinçage final de la poudre par une solution acide.

On a déjà proposé dans le US - 4 459 363 un procédé de synthèse de nitrures consistant à réduire l'oxyde d'un métal par Mg ou Ca et d'apporter l'azote nécessaire par l'adjonction d'azotures, de préférence $NaN_3$. L'utilisation de l'azoture relève plus de l'industrie des explosifs que de celle des céramiques. Le risque d'une décomposition explosive est en effet tel qu'il pourrait difficilement être assumé à l'échelle industrielle, car la grande instabilité de l'ion $N_3^-$ est bien connue. De plus, le dégagement de sodium, présent dans tous les exemples cités dans ce document, est un inconvénient supplémentaire, car le point d'ébullition de cet élément est très bas par rapport aux températures adiabatiques des réactions envisagées, de sorte qu'il faut craindre des surpressions.

De très nombreuses réactions de synthèse par SHS ont été expérimentées (cf IP BOROVINSKAYA dans Pure and Applied Chemistry - vol 64, N°7, page 919-940; 1992). Le principe de procéder à la réduction métallothermique d'un oxyde métallique avant de le combiner avec un autre élément est tout à fait classique. Les principales synthèses réalisées suivant ce principe sont résumées dans le tableau 1 de cet article. Les éléments réducteurs envisagés sont le magnésium ou l'aluminium, nulle mention n'étant faite du calcium. La synthèse des nitrures est envisagée à partir d'azote, d'ammoniac gazeux ou de composés très riches en azote, mais très facilement explosifs. De même, la synthèse des carbures est envisagée de préférence à partir de

composés gazeux $C_2H_2$, $CH_4$, $C_2H_4$. L'inconvénient de presque toutes les réactions étudiées est la nécessité d'utiliser des enceintes capables de résister à la fois à des hautes températures et à des pressions élevées. Il n'est pas étonnant que dans de telles conditions peu d'applications industrielles, voire aucune, n'en sont issues.

Le but de la présente invention est de remédier au moins en partie, aux inconvénients des procédés susmentionnés afin de permettre de produire de façon contrôlée des céramiques complexes pulvérulentes à l'aide d'une combustion autopropagée en partant de réactants en phases solides disponibles industriellement et ne nécessitant pas une enceinte pressurisée.

A cet effet, cette invention a pour objet un procédé de synthèse du type susmentionné, selon la revendication 1.

Cette invention à également pour objet un carbure, nitrure, carbo-nitrure, oxy-carbure, oxy-nitrure, nitrure ou carbure mixte, obtenu selon l'un des procédés définis par la suite. Plus particulièrement et avantageusement, les carbures mixtes sont du TiC/HfC dans un rapport molaire typiquement 40/60.

L'avantage d'apporter les métaux réfractaires sous forme d'oxyde, réside dans le fait qu'il s'agit d'une formé chimique peu onéreuse, que l'on peut généralement trouver en poudre très fine.

Il existe plusieurs raisons qui ont amené à préférer le calcium au magnésium. Son point d'ébullition (1483°C) est nettement plus élevé que celui du magnésium (1103°C) et est bien adapté aux températures auxquelles les réactions de synthèses se produisent. Le calcium est disponible sur le marché sous la forme de poudre ou de billes régulières, dont la granulométrie convient particulièrement bien à la mise en oeuvre des réactions. Enfin, l'oxyde de calcium formé au cours de la réaction est facilement soluble dans l'eau acidulée, de façon qu'il peut être très facilement éliminé par rinçage acide.

Il est possible d'apporter le carbone nécessaire à la synthèse des carbures soit pur, sous forme de poudre de carbone, soit sous forme de carbure de calcium $CaC_2$, ce composé permettant d'apporter à la fois le métalloïde et une partie du métal réducteur nécessaires à la synthèse. Dans les deux cas, les produits sont facilement disponibles sur le marché à des prix très avantageux.

La poudre de carbone a l'avantage d'être disponible à une granulométrie très fine qui permet un mélange très intime avec les autres réactants. Sa séparation complète avec la poudre de céramique résultant de la synthèse en cas de solde excédentaire est cependant délicate. On palie cet inconvénient en mettant un excédent de Ca qui se combine avec le carbone.

Le carbure de calcium a l'avantage d'apporter une partie du calcium réducteur nécessaire à la réaction sous une forme très économique. En outre, en cas de solde excédentaire à la fin de la réaction, il se décompose au cours du rinçage acide en $C_2H_4$ gazeux et en CaO et ne laisse donc pas de résidu dans la poudre de céramique synthétisée.

L'azote nécessaire pour la synthèse des nitrures est apporté avantageusement sous forme de nitrure de calcium $Ca_3N_2$, qui est un produit pulvérulent, que l'on peut obtenir en poudre fine, facile à manipuler et qui ne risque pas de se décomposer de façon explosive. C'est un produit facile à préparer par simple réaction d'azote gazeux sur le calcium dans un four à température contrôlée. Il permet aussi d'apporter une partie du calcium réducteur.

Dans le cas de synthèse de carbonitrures, le calcium peut être apporté sous forme $CaCN_2$, également disponible facilement sous forme de poudre. On peut encore synthétiser des carbonitrures en mélangeant du $CaC_2$ et $Ca_3N_2$ en proportions convenables.

Les exemples de réactions mises en oeuvre selon les modes préférés de la présente invention sont de type:

$$MO_2+2Ca+C \rightarrow MC+2CaO$$

$$2MO_2+3Ca+CaC_2 \rightarrow 2MC+4CaO$$

$$2MO_2+Ca+Ca_3N_2 \rightarrow 2MN+4CaO$$

$$M'O_2+M''O_2+4Ca+2C \rightarrow M'M''C_2+4CaO$$

$$M'O_2+M''O_2+Ca+Ca_3N_2 \rightarrow M'M''N_2+4CaO$$

$$3MO_2+3Ca+Ca_3N_2+C \rightarrow <2MN/MC>+6CaO$$

où M est un métal réfractaire.

Dans chacune des réactions ci-dessus, on peut remplacer l'unique oxyde $MO_2$ par un mélange de deux oxydes de métaux réfractaires différents $aM'O+(2-a)M''O_2$ dans des proportions molaires a et (1-a) prédéterminées, permettant d'obtenir des céramiques mixtes de deux métaux.

Ce type de réaction peut être intéressant, car on sait de "Material selection for hard coatings" de H. Holleck, Journal Vac. SCI. Tecnol A4(6) Nov/Dec (1986), qu'un carbure mixte de deux métaux présente une dureté sensiblement supérieure à celle des carbures respectifs des deux métaux qui composent ce carbure mixte et que cet accroissement de dureté était particulièrement spectaculaire dans le cas où les deux composants formant le carbure mixte sont le Ti et le Hf, comme ceci est illustré par la figure 7.

Suivant les mises en oeuvres adoptées, on peut atteindre des températures trop élevées qui peuvent nuire au bon déroulement de la réaction de synthèse souhaitée. Plusieurs moyens sont disponibles pour contrôler la température:

On peut choisir la forme et le volume du réacteur. C'est ainsi qu'un réacteur tubulaire placé dans l'air a donné d'excellents résultats qui peuvent encore être améliorés, si nécessaire, par un refroidissement extérieur dans de l'eau.

On peut aussi ajouter un sel fusible tel que NaCl qui, en fondant, absorbe de la chaleur. On a remarqué que l'addition de NaCl augmente la cinétique de la réaction. De plus, comme ce sel est soluble dans l'eau, il pourra être éliminé en même temps que la chaux formée au cours de la réaction.

On peut enfin ajouter aux produits de départ, une certaine proportion des produits obtenus après la réaction, par exemple, chaux ou céramique.

Lorsque l'on veut produire des composés céramiques sous forme de particules submicroniques, la taille des particules d'oxydes métalliques de départ sera de préférence également submicronique.

Dans certaines applications où la taille des particules de céramique produites doit être plus importante, on peut employer des oxydes abondants et bon marché tels que, par exemple, les sables d'ilménite ou de zircon. Pour obtenir la céramique pure après la réaction, on doit ensuite éliminer les oxydes formés avec le métal réducteur par une attaque chimique sélective. On peut également, lorsque c'est favorable pour l'utilisation prévue de la poudre de céramique produite, laisser les oxydes formés.

Les dessins annexés illustrent, schématiquement et à titre d'exemple, deux formes d'exécution de l'installation pour la mise en oeuvre du procédé objet de la présente invention, ainsi que des diagrammes et des photos explicatifs.

La figure 1 illustre le schéma de la première forme d'exécution;
la figure 2 illustre le schéma de la seconde forme d'exécution;
les figures 3 et 4 sont deux photos au MEB de deux poudres de céramiques obtenues selon le procédé;
la figure 5 est le spectre de diffraction X permettant d'analyser la composition exacte et la teneur en impuretés d'une poudre céramique telle que TiN;
la figure 6 est le spectre de diffraction X d'un carbure mixte de titane et d'hafnium;
la figure 7 est un diagramme montrant la dureté de carbures mixtes en fonction des concentrations respectives de deux métaux extrait de l'article de H. Holleck susmentionné.

Le mode opératoire utilisé pour la mise en oeuvre du procédé consiste tout d'abord à mélanger intimement dans un mélangeur industriel une proportion stoechiométrique de poudre d'oxyde métallique avec, suivant les cas, soit une poudre de carbone ou de carbure de calcium soit une poudre de nitrure de calcium. Pour éviter des réactions intempestives au cours de ce mélange, il est important de s'assurer au préalable que la poudre d'oxyde métallique est parfaitement sèche, ce qui peut être obtenu par un étuvage à 110°C pendant une heure. Lorsque ce premier mélange est réalisé, on ajoute une quantité de poudre de calcium excédant d'environ 10% la quantité stoechiométrique théorique, pour obtenir le mélange final.

La réaction est déclenchée par un chauffage modéré de tout ou partie de la masse. En effet, la réaction étant fortement exothermique, elle se propage rapidement, dès qu'une partie du mélange est porté à une température seuil $T_s$ de déclenchement de la réaction. Le chauffage peut être réalisé à l'aide d'un four, d'un chalumeau, par induction ou de tout autre manière appropriée.

Bien que l'on puisse parfaitement travailler directement à l'atmosphère en plaçant un léger excès de métal réducteur, on préfère cependant opérer sous couverture de gaz neutre, tel que l'argon, pour protéger le récipient de l'oxydation.

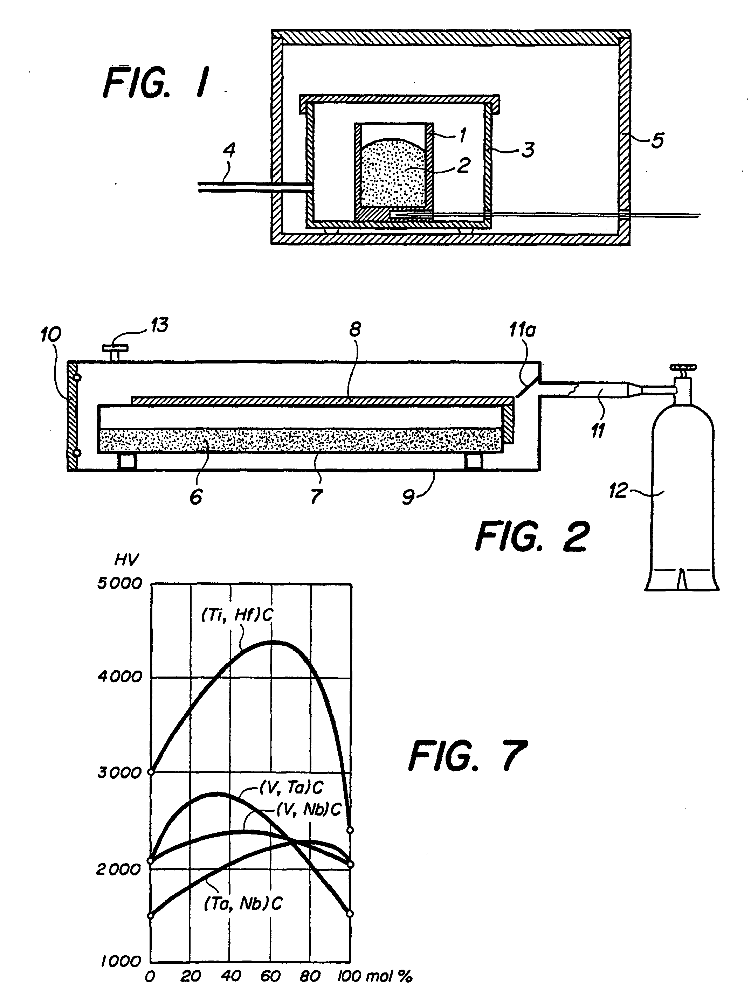

Le schéma de principe de l'installation pour la mise en oeuvre du procédé illustré par la figure 1 montre un creuset 1 en acier courant XC38, pour recevoir le mélange des réactants 2. Ce creuset 1 est disposé dans une enceinte fermée 3, en acier inoxydable réfractaire, reliée par un conduit d'alimentation 4 à une source de gaz neutre, notamment de l'azote pour les nitrures et de l'argon pour les carbures. Un thermocouple est inséré dans un logement ménagé dans le fond du creuset 1. Cette enceinte fermée 3 est placée dans le moufle 5 d'un four électrique de 3,3kW. A titre indicatif, dans les exemples qui suivent, le volume de l'enceinte 3 était de 3 litres et celui du creuset 1 d'environ 500cm$^3$.

Les premiers essais ont été conduits avec beaucoup de précautions, car on pouvait craindre une réaction explosive. Il a au contraire été constaté avec surprise que la réaction se déclenchait lorsque la température de l'enceinte était comprise entre 450°C et 800°C, suivant les cas et qu'elle s'autopropageait à l'ensemble du volume des réactants sans aucune surpression significative. Après refroidissement, il a été constaté que le produit de la réaction était une masse pulvérulente facilement divisible.

Après lavage à l'acide chlorhydrique, filtrage sur un filtre de type Büchner et séchage sous vide à 60°C, on a obtenu des poudres de granulométrie très fine, typiquement de l'ordre de 0,35 µm, telle que confirmé au MEB. La pureté chimique était de l'ordre de 98% et, de manière surprenante, très peu d'agglomérats de grains se sont formés et ils ont pu être facilement défaits par un broyage de faible intensité.

Suite à ces premiers essais réussis, un mode de mise en oeuvre simplifié de la réaction a été expérimenté à l'aide de l'installation schématisée par la figure 2. On a placé à peu près 1 Kg de charge réactive 6 dans une lingotière plate 7 en acier au carbone de 9 cm de largeur sur 50 cm de longueur et 3 cm de profondeur, soit un volume d'environ 1350 cm$^3$, fermée par un couvercle 8. Cette lingotière 7 est placée dans une enceinte parallélépipédique 9 en acier fermée par un couvercle 10. Un conduit d'admission 11 débouche à une extrémité de l'enceinte 9 et est relié à une source de gaz neutre 12 tel que de l'azote ou de l'argon. Un déflecteur 11a dirige ce gaz vers le fond de l'enceinte 9. Afin de permettre le balayage de l'intérieur de celle-ci par ce gaz neutre, une ouverture d'évacuation 13 est ménagée à l'autre extrémité de cette enceinte 9, à l'aplomb de l'extrémité de la lingotière 7. Cette ouverture 13 sert également à allumer la charge 6 et elle peut ensuite être fermée pendant le refroidissement pour éviter l'oxydation. Après l'allumage, la réaction se propage à une vitesse variable, fonction de la nature de la charge, des caractéristiques thermiques de la lingotière 7 et du débit de gaz neutre.

Après refroidissement, la charge est immergée progressivement dans un réacteur en acier inoxydable à fond conique (non représenté) muni d'un agitateur contenant environ 10 l d'eau du robinet. Lorsque les dégagements gazeux éventuels ont cessé, on met en route l'agitateur et on rajoute progressivement de l'acide acétique en contrôlant le pH en continu. Lorsque la neutralité est atteinte, on laisse décanter, on soutire la solution surnageante et on la remplace par de l'eau du robinet. Si nécessaire, on ajoute à nouveau l'acide acétique jusqu'à l'obtention de la neutralité. Après quelques heures d'agitation, on procéde à nouveau à une décantation et on remplace l'eau du robinet par de l'eau déminéralisée. On brasse la poudre avec cette eau pendant deux heures et on décante la poudre qui est soutirée par le bas du réacteur après élimination de l'eau surnageante. La poudre est finalement filtrée et séchée dans un réacteur sous vide.

Exemple N° 1

Production de TiC à partir de TiO$_2$, Ca et C par la réaction:

$$TiO_2 + 2Ca + C \rightarrow 2CaO + TiC$$

On utilise 480 g de TiO$_2$ en poudre submicronique déshydratée, 72 g de noir de carbone et 530 g de Ca en billes de diamètre inférieur à 500 μm (soit un excès de calcium d'environ 10% sur la quantité stoechiométrique théorique).

Après avoir au préalable mélangé TiO$_2$ et le carbone, le calcium est ajouté et à son tour mélangé dans un mélangeur mécanique. La charge est placée dans la lingotière, sous flux d'argon, et allumée à une extrémité avec un chalumeau. La réaction se déroule en 3 minutes environ. Après refroidissement sous argon, le mélange pulvérulent est traité comme indiqué précédemment.

On recueille 349 g de TiC sous forme de poudre submicronique bien cristallisée et ayant une granulométrie moyenne de 0,7 μm. La teneur en oxygène est de 0,6%.

Exemple 2

Production de TiC à partir de TiO$_2$, de Ca et de CaC$_2$ par la réaction:

$$2TiO_2+3Ca+CaC_2 \rightarrow 2TiC+4CaO$$

On utilise 450 g de TiO$_2$, 225 g de CaC$_2$ et 370 g de Ca.

On procède comme précédemment. La quantité de TiC recueillie est alors de 325 g. La poudre est identique à celle de l'exemple 1, mais sa teneur en oxygène plus élevée de 1,5%.

Exemple 3

Production de HfC à partir de HfO$_2$, de Ca et de C par la réaction

$$HfO_2+2Ca+C \rightarrow HfC+2CaO$$

On utilise 737 g de HfO$_2$, 42 g de carbone et 310 g de calcium.

On procède comme précédemment. La quantité de HfC recueillie est alors de 650 g. La poudre bien cristallisé a une granulométrie moyenne de 0,5 μm.

Exemple 4

Production de TiN à partir de TiO$_2$, de Ca et de Ca$_3$N$_2$ par la réaction

$$2TiO_2+Ca+Ca_3N_2 \rightarrow 2TiN+4CaO$$

On utilise 448 g de TiO$_2$, 415 g de Ca$_3$N$_2$ et 130 g de calcium.

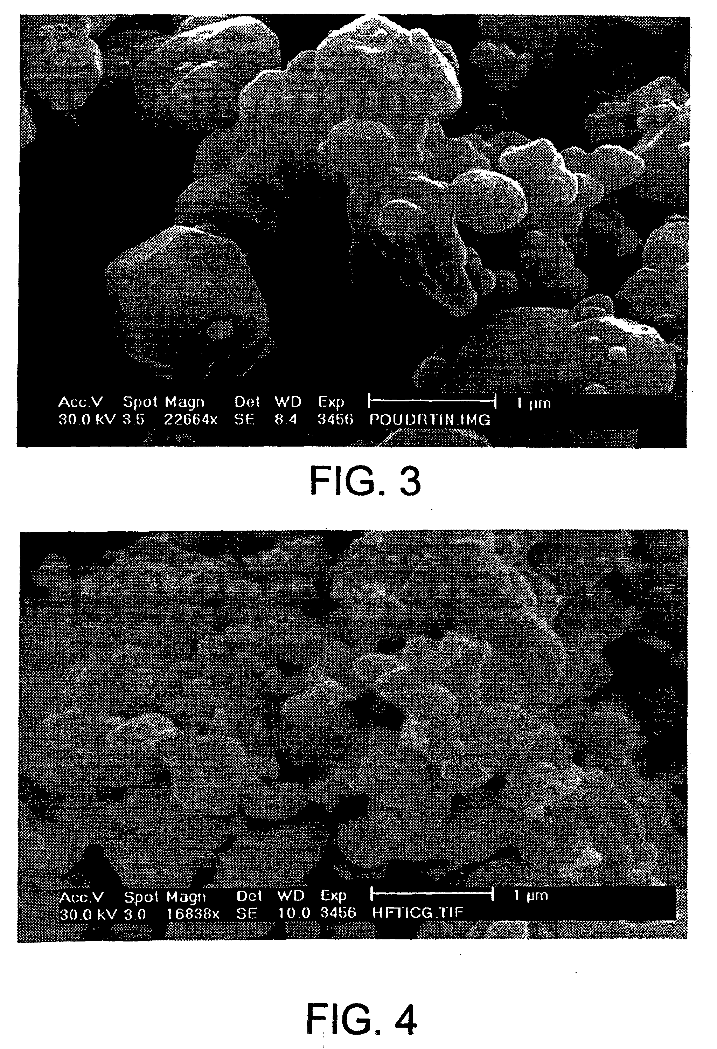

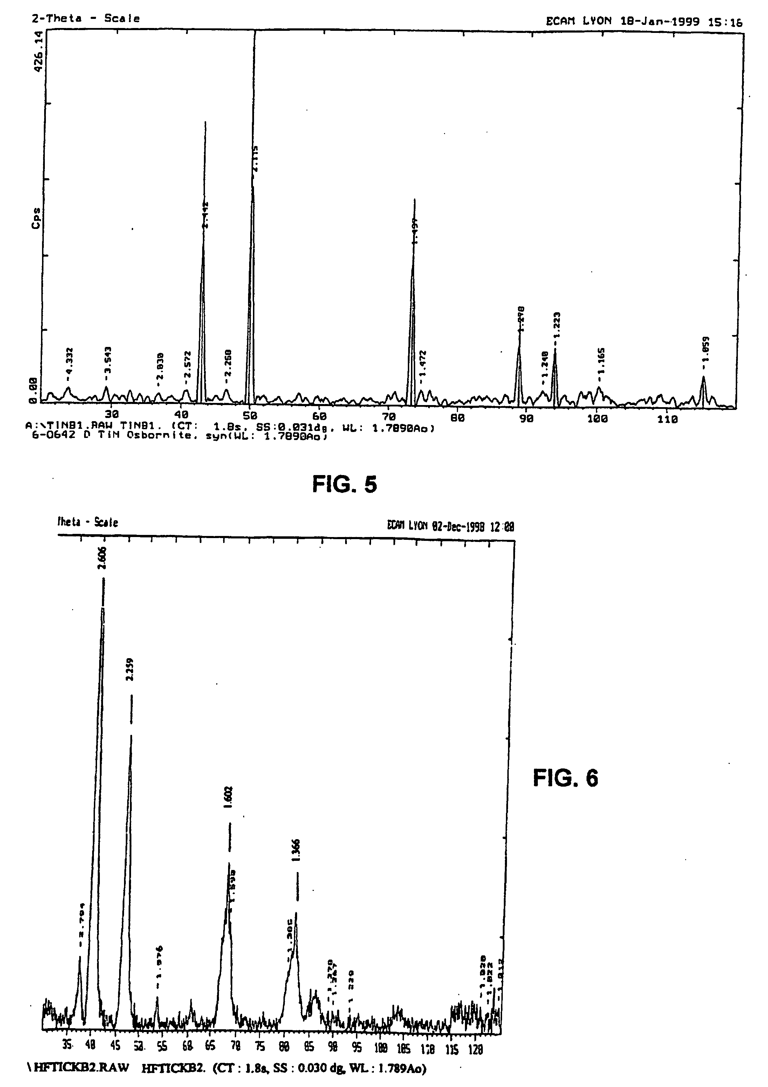

On procède comme précédemment, sauf que la réaction a lieu sous courant d'azote. La quantité de TiN recueillie est de 330 g. L'aspect du produit est donné sur la photo annexée (figure 3) ainsi que le spectre de diffraction des rayons X (figure 5). L'analyse chimique fait apparaître une teneur en oxygène égale à 0,7%.

Exemple 5

Production de ZrN à partir de ZrO$_2$, de Ca et de Ca$_3$N$_2$ par la réaction

$$2ZrO_2+Ca+Ca_3N_2 \rightarrow 2ZrN+4CaO$$

On utilise 555 g de ZrO$_2$, 335 g de Ca$_3$N$_2$ et 100 g de calcium.
On procède comme dans l'exemple 4, sous courant d'azote. La quantité de ZrN recueillie est de 460 g de granulométrie moyennne 0,7 μm.

Exemple 6

Production de HfN à partir de HfO$_2$, de Ca et de Ca$_3$N$_2$ par la réaction

$$2HfO_2+Ca+Ca_3N_2 \rightarrow 2HfN+4CaO$$

On utilise 682g de HfO$_2$, 240 g de Ca$_3$N$_2$ et 75 g de calcium.
On procède comme dans l'exemple 4 sous courant d'azote. La quantité de HfN recueillie est de 602 g de granulométrie < 1 μm.

Exemple 7

Production de Hf$_3$Ti$_2$C$_5$ à partir de HfO$_2$, de Ti$_2$O$_2$ de C et Ca, par la réaction

$$3HfO_2+2Ti_2O_2+10Ca+5C \rightarrow Hf_3Ti_2C_5+10CaO$$

On utilise 442 g de HfO$_2$, 192 g de TiO$_2$, 54 g de carbone et 400 g de calcium et on veille tout particulièrement à faire un mélange intime des deux poudres d'oxydes.
La réaction est mise en oeuvre comme dans l'exemple 1. On recueille 530 g de carbure mixte de Hf$_3$Ti$_2$C$_5$ de granulométrie moyenne de 0,3 μm, telle que représentée sur la figure 4. Le spectre de diffraction X de cette poudre, tel que représenté sur la figure 6 permet de calculer un paramètre de maille de 4,52524 Å, alors que ceux de HfC et de TiC sont respectivement de 4,63765 Å et de 4,3274 Å.
Ce résultat permet de conclure à la formation d'un carbure mixte unique intégrant dans sa structure cristalline les atomes des deux métaux, alors que l'on pourrait s'attendre à la formation d'un mélange de cristaux de HfC et TiC. Ce résultat inattendu présente un grand intérêt, car il permet de synthétiser des carbures mixtes de dureté élevée avec une grande facilité de mise en oeuvre.
A des températures localement aussi élevées que celles des réactions de synthèse susmentionnées, les éléments sont probablement sous la forme de gaz ionisé très réactif dans laquelle il n'est pas possible de différencier les métaux entre eux pas plus que les métalloïdes, ce qui permet d'envisager la production de n'importe quelle combinaison comprenant plusieurs métaux et plusieurs métalloïdes.
La composition finale est déterminée par la composition initiale des réactants. Ceci ouvre la possibilité de synthèse non seulement de carbures mixtes, mais également de carbonitrures en toutes proportions.

**Revendications**

1. Procédé de synthèse de céramiques complexes pulvérulentes de métaux réfractaires, selon lequel on mélange un oxyde d'au moins un de ces métaux avec un métal réducteur et avec un métalloïde pur ou combiné sous forme solide, et on chauffe le mélange résultant à une température seuil d'amorce d'une réaction autopropagée, afin d'obtenir la synthèse d'une céramique pulvérulente, **caractérisé en ce que**
   on choisit la taille des particules d'au moins un oxyde métallique en fonction de la granulométrie désirée pour ladite céramique,
   on ajoute, dans une proportion définie, au moins un desdits métalloïdes à l'état pur ou combine sous forme de carbure ou de nitrure, avec le calcium, lui-même ajouté à l'état combiné et/ou pur dans une proportion définie en tant que métal réducteur.

2. Procédé selon la revendication 1, **caractérisé en ce que** lesdits oxydes métalliques sont choisis parmi le TiO$_2$, le HfO$_2$ et le ZrO$_2$.

3. Procédé selon l'une des revendications précédentes, **caractérisé en ce que** l'on mélange au moins deux oxydes de métaux réfractaires différents dans une proportion déterminée, afin de former des phases complexes.

4. Procédé selon la revendication 3, **caractérisé en ce que** le métalloïde est le carbone et lesdits oxydes métalliques sont le TiO$_2$ et le HfO$_2$, mélangés dans une proportion apte à produire un composé TiC/HfC dont le rapport molaire des métaux est compris entre 40/60 et 50/50.

5. Procédé selon l'une des revendications précédentes, **caractérisé en ce que** l'on choisit des poudres d'oxydes métalliques dont la granulométrie est < 1 µm.

6. Procédé selon l'une des revendications précédentes, **caractérisé en ce qu'**une fois la réaction terminée, on dissout l'oxyde de calcium formé au cours de cette réaction à l'aide d'acide chlorhydrique ou d'acide acétique.

7. Procédé selon l'une des revendications précédentes, **caractérisé en ce que** le métalloïde est apporté sous forme $CaC_2$, $Ca_3N_2$ ou $CaCN_2$.

8. Procédé selon l'une des revendications précédentes, **caractérisé en ce que** l'on dispose le mélange de réactants pulvérulents dans une réacteur tubulaire et que l'on chauffe ce mélange à ladite température seuil à une extrémité de ce réacteur.

9. Procédé selon l'une des revendications précédentes, **caractérisé en ce que** l'on contrôle la température de la réaction en refroidissant la paroi du réacteur.

10. Procédé selon l'une des revendications précédentes, **caractérisé en ce que** l'on contrôle la température de la réaction en ajoutant audit mélange pulvérulent, une proportion de NaCl, ou autre sel, appropriée à la température de réaction désirée.

**Patentansprüche**

1. Verfahren zur Herstellung komplexer pulverförmiger Keramik aus feuerfesten Metallen, nach dem ein Oxid von mindestens einem dieser Metalle mit einem Reduktionsmetall und mit einem reinen oder in fester Form kombinierten Nichtmetall gemischt wird, das entstehende Gemisch auf eine Ausgangsschwellentemperatur einer sich selbst ausbreitenden Reaktion erwärmt wird, um die Herstellung einer pulverförmigen Keramik zu bewerkstelligen, **dadurch gekennzeichnet, dass**
die Größe der Teilchen von mindestens einem Metalloxid in Abhängigkeit von der für diese Keramik gewünschten Granulometrie gewählt ist,
in einem bestimmten Verhältnis mindestens eines der Nichtmetalle in reinem Zustand oder in der Form von Karbid oder Nitrid kombiniert mit dem Kalzium hinzugefügt wird, wobei Letzteres in kombiniertem und/oder reinem Zustand in einem Verhältnis hinzugefügt wird, das als Reduktionsmetall definiert ist.

2. Verfahren nach Anspruch 1, **dadurch gekennzeichnet, dass** die Metalloxide ausgewählt sind unter $TiO_2$, $HfO_2$ und $ZrO_2$.

3. Verfahren nach einem der vorhergehen Ansprüche, **dadurch gekennzeichnet, dass** mindestens zwei Oxide von verschiedenen feuerfesten Metallen in einem bestimmten Verhältnis gemischt werden, um komplexe Phasen zu bilden.

4. Verfahren nach Anspruch 3, **dadurch gekennzeichnet, dass** das Nichtmetall Karbid ist und die Metalloxide $TiO_2$ und $HfO_2$ sind, gemischt in einem Verhältnis, das geeignet ist, um eine Verbindung TiC/HfC herzustellen, bei der das Molverhältnis der Metalle zwischen 40/60 und 50/50 beträgt.

5. Verfahren nach einem der vorhergehenden Ansprüche, **dadurch gekennzeichnet, dass** Metalloxidpulver gewählt werden deren Granulometrie < 1 µm beträgt.

6. Verfahren nach einem der vorhergehenden Ansprüche, **dadurch gekennzeichnet, dass** sofort nach Abschluss der Reaktion das während dieser Reaktion gebildete Kalziumoxid mit Hilfe von Salzsäure oder Essigsäure gelöst wird.

7. Verfahren nach einem der vorhergehenden Ansprüche, **dadurch gekennzeichnet, dass** das Nichtmetall in der Form $CaC_2$, $Ca_3N_2$ oder $CaCN_2$ zugeführt wird.

8. Verfahren nach einem der vorhergehenden Ansprüche, **dadurch gekennzeichnet, dass** das Gemisch pulverförmiger Reaktanden in einen Röhrenreaktor gegeben wird, und das Gemisch an einem Ende des Reaktors auf die Schwellentemperatur erwärmt wird.

9. Verfahren nach einem der vorhergehenden Ansprüche, **dadurch gekennzeichnet, dass** die Temperatur der Reaktion durch Abkühlen der Reaktorwand reguliert wird.

10. Verfahren nach einem der vorhergehenden Ansprüche, **dadurch gekennzeichnet, dass** die Temperatur der Reaktion reguliert wird, indem zu dem pulverförmigen Gemisch entsprechend der gewünschten Reaktionstemperatur ein Anteil NaCl oder eines anderen Salzes hinzugefügt wird.

**Claims**

1. A method for the synthesis of pulverulent complex ceramics of refractory metals, which comprises mixing an oxide of at least one of these metals with a reducing metal and with a semimetal which is pure or combined in the solid form and heating the resulting mixture to a threshold temperature for initiating a self-propagated reaction, in order to obtain the synthesis of a pulverulent ceramic, **characterized in that**

the size of the particles of at least one metal oxide is chosen according to the particle size desired for said ceramic,

at least one of said semimetals is added, in a defined proportion, in the pure state or in the form of carbide or nitride combined with calcium, itself added in the combined and/or pure state in a defined proportion as reducing metal.

2. The method as claimed in claim 1, **characterized in that** said metal oxides are chosen from $TiO_2$, $HfO_2$ and $ZrO_2$.

3. The method as claimed in either of the preceding claims, **characterized in that** at least two oxides of different refractory metals are mixed in a predetermined proportion, in order to form complex phases.

4. The method as claimed in claim 3, **characterized in that** the semimetal is carbon and said metal oxides are $TiO_2$ and $HfO_2$, mixed in a proportion capable of producing a TiC/HfC compound for which the molar ratio of the metals is between 40/60 and 50/50.

5. The method as claimed in one of the preceding claims, **characterized in that** metal oxide powders are chosen with a particle size of < 1 µm.

6. The method as claimed in one of the preceding claims, **characterized in that**, once the reaction is complete, the calcium oxide formed during this reaction is dissolved using hydrochloric acid or acetic acid.

7. The method as claimed in one of the preceding claims, **characterized in that** the semimetal is introduced in the $CaC_2$, $Ca_3N_2$ or $CaCN_2$ form.

8. The method as claimed in one of the preceding claims, **characterized in that** the mixture of pulverulent reactants is placed in a tubular reactor and **in that** this mixture is heated to said threshold temperature at one end of this reactor.

9. The method as claimed in one of the preceding claims, **characterized in that** the temperature of the reaction is controlled by cooling the wall of the reactor.

10. The method as claimed in one of the preceding claims, **characterized in that** the temperature of the reaction is controlled by adding, to said pulverulent mixture, a proportion of NaCl or other salt appropriate to the desired reaction temperature.

FIG. 1

FIG. 2

FIG. 7

FIG. 3

FIG. 4

A:\TINB1.RAW TINB1. (CT: 1.8s, SS:0.031dg, WL: 1.7890Ao)
6-0642 D TiN Osbornite, syn(WL: 1.7890Ao)

**FIG. 5**

**FIG. 6**

\HFTICKB2.RAW   HFTICKB2.  (CT : 1.8s, SS : 0.030 dg, WL : 1.789Ao)